# EUROPEAN PATENT APPLICATION

(11) **EP 1 819 068 A1**
(43) Date of publication of application: **15.08.2007**
(21) Application number: 06711717.6
(22) Date of filing: 16.01.2006
(51) Int. Cl.: H04B 7/26

(54) **RESOURCE ALLOCATION METHOD AND BASE STATION DEVICE**

(30) Priority: 18.01.2005 JP 2005010479
(71) Applicant: Matsushita Electric Industrial Co., Ltd., Kadoma-shi, Osaka 571-8501 (JP)
(72) Inventor: OKA, Naoto c/o Matsushita Electric Industrial co.Ltd., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2006/300436
(87) International publication number: WO 2006/077790

(57) **Abstract**

There are disclosed a resource allocation method and a base station device for realizing an effective resource allocation for reducing delay time and overhead. In this device, when a base station (11) has received an erroneous data packet (22) from a mobile station (10) , prior to the initial transmission of the data packet (22) , the base station (11) allocates a resource to the mobile station (10) according to contents (such as transmission packet length and priority) of a reservation signal (20) reported from the mobile station (10) and transmits an allocation signal (21) and NACK (23-1) to the mobile station (10).

## Description

### Technical Field

The present invention relates to a resource allocation method for allocating resources required for a base station to communicate with a mobile station, and to a base station apparatus.

### Background Art

As a conventional resource allocation method, a technique disclosed in Patent Document 1 is proposed. The resource allocation method as described in Patent Document 1 will be described below in detail with reference to FIG.1. As shown in FIG.1, before transmitting data packet 52-1, a mobile station transmits reservation signal 50 storing a user ID, priority, transmission packet length and other control data to a base station as reservation signal 50-1.

The base station receiving reservation signal 50-1 from the mobile station allocates resources (such as code, power and time) enabling the mobile station to transmit a packet with the transmission packet length included in reservation signal 50-1, according to the priority included in reservation signal 50-1, and transmits allocation signal 51-1 to the mobile station.

Next, the mobile station receiving allocation signal 51-1 from the base station transmits data packet 52-1 to the base station according to the conditions (such as code, power, time and modulation scheme) of received allocation signal 51-1.

In this case, when the base station erroneously receives data packet 52-1 transmitted from the mobile station, the base station transmits negative acknowledgement signal (NACK) 53-1 to the mobile station. The mobile station receiving negative acknowledge signal (NACK) 53-1 recognizes that data packet 52-1 is not received correctly at the base station, and transmits reservation signal 50-2 to the base station to receive resource allocation from the base station assuming that data packet 52-2 is transmitted again. Herein, data packet 52-2 has the same data content as that of data packet 52-1.

The base station receiving reservation signal 50-2 from the mobile station allocates resources (such as code, power and time) enabling the mobile station to transmit a packet with the transmission packet length included in reservation signal 50-2, according to the priority included in reservation signal 50-2, and transmits allocation signal 51-2 to the mobile station.

The mobile station receiving allocation signal 51-2 from the base station transmits data packet 52-2 for retransmission to the base station according to the conditions (such as code, power, time and modulation scheme) of received allocation signal 51-2.

When the base station correctly receives retransmission data packet 52-2 transmitted from the mobile station, the base station transmits acknowledgment signal (ACK) 53-2 to the mobile station.

Thus, when the base station erroneously receives a data packet transmitted from the mobile station, a series of processing (transmission of a reservation signal from the mobile station to the base station, transmission of an allocation signal from the base station to the mobile station, transmission of a data packet from the mobile station to the base station, and transmission of a negative acknowledgment signal (NACK) from the base station to the mobile station) is repeated.

By using this technique, the base station allocates resources to mobile stations according to the priority included in a reservation signal from the mobile station, so that it is possible to implement fine resource allocation suitable for each application.
Patent Document 1: Japanese Patent Application Laid-Open No.2004-128967

### Disclosure of Invention

### Problems to be Solved by the Invention

However, in the above-mentioned resource allocation method as described in Patent Document 1, when a mobile station receives resource allocation to transmit retransmission data packet 52-2, it is necessary for the mobile station to transmit reservation signal 50-2 again to the base station and receive allocation signal 51-2 in response to reservation signal 50-2 from the base station. In other words, in order to transmit a retransmission data packet, the above-mentioned series of processing is repeated from the beginning, and problems arise that the delay time increases, and that overhead which becomes processing load, increases.

It is therefore an object of the present invention to provide a resource allocation method and a base station apparatus for implementing efficient resource allocation which shortens the delay time and reduces overhead.

### Means for Solving the Problem

The resource allocation method of the present invention includes: transmitting a reservation signal including a transmission packet length to a base station apparatus from a mobile station apparatus prior to first transmission of a data packet; and, when the base station apparatus detects an error in the data packet transmitted from the mobile station apparatus, transmitting a negative acknowledgement signal for reporting the error of the data packet to the mobile station apparatus from the base station apparatus, and allocating resources to the mobile station apparatus that retransmits the data packet where the error is detected based on the reservation signal.

### Advantageous Effect of the Invention

According to the present invention, when an error is detected in a data packet transmitted from a mobile station, by allocating resources to the mobile station that retransmits the same data packet based on a reservation signal acquired prior to first transmission of the data packet where the error is detected, without using a reservation signal for retransmission from the mobile station, the mobile station does not need to retransmit a reservation signal to the base station apparatus, so that it is possible to correspondingly reduce the delay time for transmitting a data packet and decrease overhead.

### Brief Description of Drawings

FIG.1 is a sequence diagram for explanation of a resource allocation method described in Patent Document 1;
FIG.2 is a sequence diagram for explanation of a resource allocation method according to one embodiment of the present invention;
FIG.3 is a block diagram showing a configuration of a base station apparatus according to one embodiment of the present invention;
FIG.4 is provided for explanation of tables; and
FIG.5 is a flowchart illustrating packet reception operation in the base station.

### Best Mode for Carrying Out the Invention

An embodiment of the present invention will be specifically described below with reference to the accompanying drawings.

### (Embodiment)

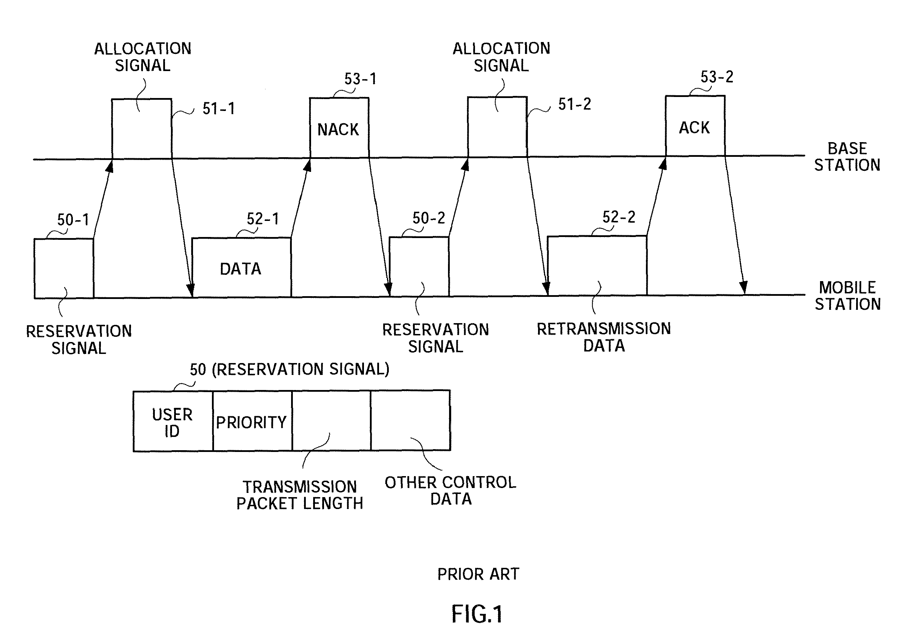

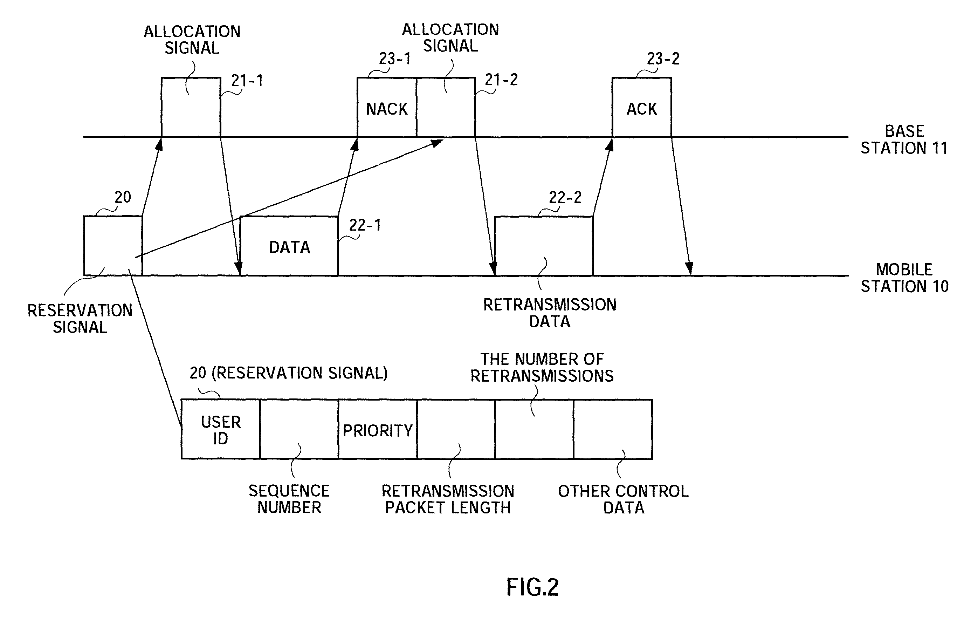

FIG.2 is a sequence diagram for explanation of a resource allocation method according to one embodiment of the present invention. In the figure, reservation signal 20 transmitted to base station 11 from mobile station 10 before mobile station 10 transmits a data packet to base station 11, includes a user ID, sequence number, priority, transmission packet length, the number of retransmissions and other control data. Herein, the sequence number is a sequence number of a data packet to be transmitted, and the number of retransmissions is determined by allowable delay amount of the data to be transmitted.

As a specific sequence, base station 11 receiving reservation signal 20 from mobile station 10 allocates resources (such as code, power and time) required for mobile station 10 to transmit a packet with the transmission packet length included in reservation signal 20, and transmits allocation signal 21-1 tomobile station 10.

Mobile station 10 receiving allocation signal 21-1 from base station 11 transmits data packet 22-1 to base station 11, according to conditions (such as code, power, time and modulation scheme) of received allocation signal 21-1.

When base station 11 erroneously receives data packet 22-1 transmitted from mobile station 10, base station 11 transmits negative acknowledgement signal (NACK) 23-1 to mobile station 10, allocates resources required for mobile station 10 to transmit retransmission packet 22-2 according to the transmission packet length included in reservation signal 20, and further takes into consideration current channel quality information (described later), and transmits allocation signal 21-2 to mobile station 10. In this case, the data content of retransmission data packet 22-2 is the same as that of data packet 22-1.

Mobile station 10 receiving allocation signal 21-2 from base station 11 transmits retransmission data packet 22-2 according to the conditions of received allocation signal 21-2. When base station 11 correctly receives data packet 22-2 transmitted frommobile station 10, base station 11 transmits acknowledgement signal (ACK) 23-2 tomobile station 10. In addition, when mobile station 10 can receive neither ACK nor NACK due to influence of noise between mobile station 10 and base station 11, mobile station 10 transmits again reservation signal 20 to base station 11 as in first transmission.

Thus, when base station 11 transmits negative acknowledgment signal (NACK) 23-1 to mobile station 10, base station 11 transmits the allocation signal of resources according to the data packet length included in the last reservation signal, and therefore mobile station 10 does not need to transmit again the reservation signal to base station 11.

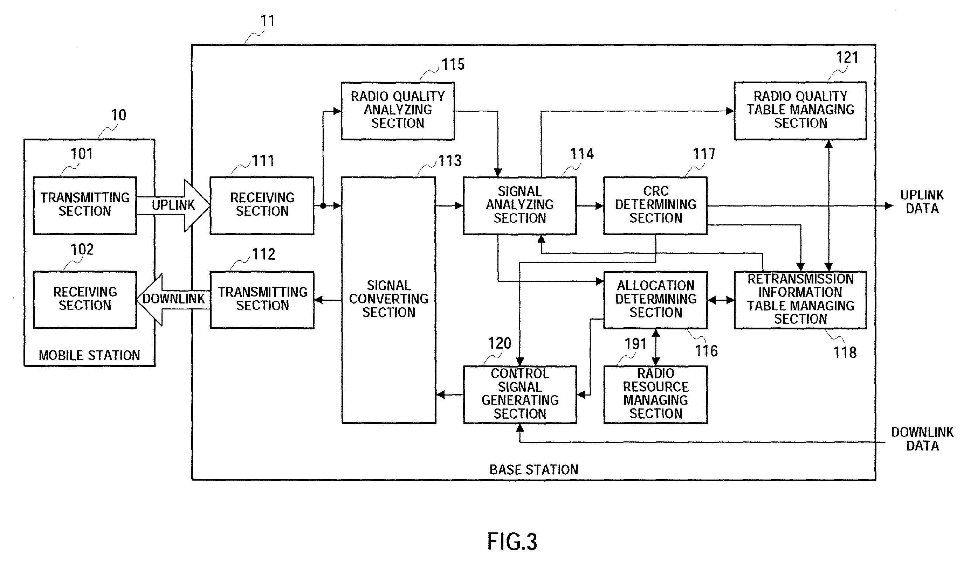

FIG.3 is a block diagram mainly showing a configuration of the base station apparatus according to one embodiment of the present invention. In the figure, each arrow between blocks indicates the flow of a signal together with the connection. In FIG.3, mobile station 10 has transmitting section 101 and receiving section 102.

Transmitting section 101 transmits signals such as reservation signal 20 and data packets 22-1 and 22-2 (hereinafter, collectively referred to as data packet 22) to base station 11 using the uplink channel.

Receiving section 102 receives signals such as allocation signals 21-1 and 21-2 (hereinafter, collectively referred to as allocation signal 21), acknowledgement signal (ACK) 23-1 and negative acknowledgment signal (NACK) 23-2 (hereinafter, collectively referred to as acknowledge signal 23) transmitted from base station 11 using the downlink channel, and analyzes the signals.

On the other hand, base station 11 has receiving section 111, transmitting section 112, signal converting section 113, signal analyzing section 114, channel quality analyzing section 115, allocation determining section 116, CRC determining section 117, retransmission information table managing section 118, radio resource managing section 119, control signal generating section 120 and channel quality table managing section 121.

Receiving section 111 receives signals such as reservation signal 20 and data packet 22 transmitted from mobile station 10 using the uplink channel, and transfers the received signal to signal converting section 113 and channel quality analyzing section 115.

Transmitting section 112 transmits signals such as allocation signal 21 and acknowledge signal (ACK, NACK) 23 transferred from signal converting section 113 to mobile station 10 using the downlink channel.

Signal converting section 113 performs convertingprocessing (such as despreading, demodulation and decoding processing) on the signals such as reservation signal 20 and data packet 22 transferred from receiving section 111 and transfers the results to signal analyzing section 114. Further, signal converting section 113 performs converting processing (such as spreading, modulation and coding processing) on a control signal transferred from control signal generating section 120 and the downlink data packet, to obtain signals such as allocation signal 21 and acknowledge signal (ACK, NACK) 23 transferred to transmitting section 112.

Channel quality analyzing section 115 analyzes channel quality typified by a S/N ratio (Signal to Noise Ratio) and the like of a signal such as reservation signal 20 and data packet 22 transferred from receiving section 111, and reports the channel quality information to signal analyzing section 114.

Signal analyzing section 114 associates the signal transferred from signal converting section 113 with the channel quality information reported from channel quality analyzing section 115. Then, signal analyzing section 114 reports an update signal based on the channel quality information, user ID indicating a transmission source user that transmits the data packet, and the channel quality information to channel quality table managing section 121.

Further, signal analyzing section 114 analyzes a type of the signal transferred from signal converting section 113 as to whether the signal is data packet 22 or reservation signal 20, and, when receiving data packet 22, transfers the data to CRC determining section 117. Furthermore, when receiving reservation signal 20, base station 11 transmits allocation signal 21 to mobile station 10, and signal analyzing section 114 reports a transmission request signal of data packet 22, user ID, priority, transmission packet length and channel quality information to allocation determining section 116 and further reports a retransmission information table entry request signal, user ID, sequence number of the data packet, priority, transmission packet length and the number of retransmissions to retransmission information table managing section 118 for the retransmission of data packet 22.

Allocation determining section 116 performs scheduling on a plurality of transmission requests reported from signal analyzing section 114 and retransmission information table managing section 118, according to the user ID, priority, transmission packet length and channel quality information associated with the transmission requests, and an uplink radio resource remaining amount reported from radio resource managing section 119. In addition, for the transmission request described herein, retransmission information table managing section 118 reports a retransmission request to allocation determining section 116. Further, in this case, transmission of retransmission data packet 22 is given a higher priority than that of first transmission packet 22. Allocation determining section 116 reports to control signal generating section 120 a radio resource allocation signal generation request and information (such as power, time, code and modulation scheme) to be stored in an allocation signal for mobile station 10 to transmit data packet 22 to which the allocation is determined. Further, allocation determining section 116 reports an allocated radio resource amount to radio resource managing section 119.

CRC determining section 117 makes a CRC determination on the data transferred from signal analyzing section 114, and, when an error is detected, reports a NACK generation request signal, user ID and a sequence number of the data packet to control signal generating section 120, and further reports an error detection signal, user ID and the sequence number to retransmission information table managing section 118. Furthermore, when an error is not detected, CRC determining section 117 reports an ACK generation request signal, user ID and the sequence number to control signal generating section 120, and further reports a normal reception signal, user ID and the sequence signal to retransmission information table management 118, and outputs the received data to an upper apparatus as uplink data.

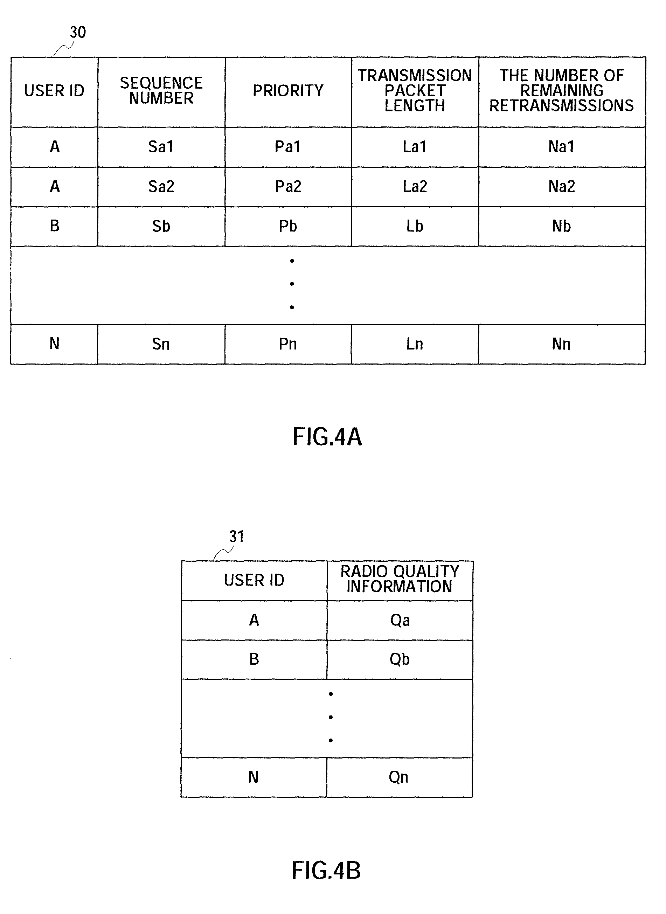

When the retransmission information table entry request signal is reported from signal analyzing section 114 , retransmission information table managing section 118 writes the user ID, the sequence number, priority, transmission packet length and the number of retransmissions associated with the retransmission information table entry request signal in retransmission information table 30 as new entries as shown in FIG.4. Herein, FIG.4A shows a table managed by retransmission information table managing section 118, and FIG. 4B shows a table managed by channel quality table managing section 121.

Further, when an error detection signal for packet data is reported from CRC determining section 117, and retransmission information table 30 has entries corresponding to the user ID and the sequence number associated with the error detection signal, retransmission information table managing section 118 acquires channel quality information corresponding to the user ID from channel quality table managing section 121, and further acquires a retransmission request signal, user ID, priority and transmission packet length from the retransmission information table entries, and reports to allocation determining section 116 together with the channel quality information. Then, retransmission information table managing section 118 decrements the number of remaining retransmissions in the entry of the retransmission information table, and, when the number of remaining retransmissions becomes zero, deletes the entries from retransmission information table 30. Further, when a normal reception signal is reported from CRC determining section 117, retransmission information table managing section 118 deletes entries corresponding to the user ID and the sequence number associated with the normal reception signal.

Radio resource managing section 119 manages allocation states of radio resources (such as power, time and code), and reports an uplink radio resource remaining amount to allocation determining section 116. Further, radio resource managing section 119 updates the allocation states of uplink radio resources using the allocated resource amount (such as power, time and code) reported from allocation determining section 116.

Control signal generating section 120 generates an allocation signal when allocation determining section 116 reports the radio resource allocation signal generation request and information (such as power, time, code and modulation scheme) to be stored in the allocation signal, and transfers the signal to signal converting section 113. Further, when an ACK or NACK generation request signal is reported from CRC determining section 117, control signal generating section 120 generates an acknowledge signal (ACK or NACK) storing the user ID and the sequence number associated with the ACK or NACK generation request signal and transfers the signal to signal converting section 113.

When a channel quality update signal is reported from signal analyzing section 114, and channel quality table 31 has entries corresponding to the user ID associated with the channel quality update signal as shown in FIG.4B, channel quality table managing section 121 updates the channel quality information of the entries to the channel quality information associated with the channel quality update signal. On the other hand, when channel quality table 31 does not have entries corresponding to the user ID associated with the channel quality update signal, channel quality table managing section 121 writes the user ID and channel quality information as new entries in channel quality table 31. Further, when retransmission information table managing section 118 searches the channel quality information, channel quality table managing section 121 reports the channel quality information corresponding to the reported user ID to retransmission information table managing section 118.

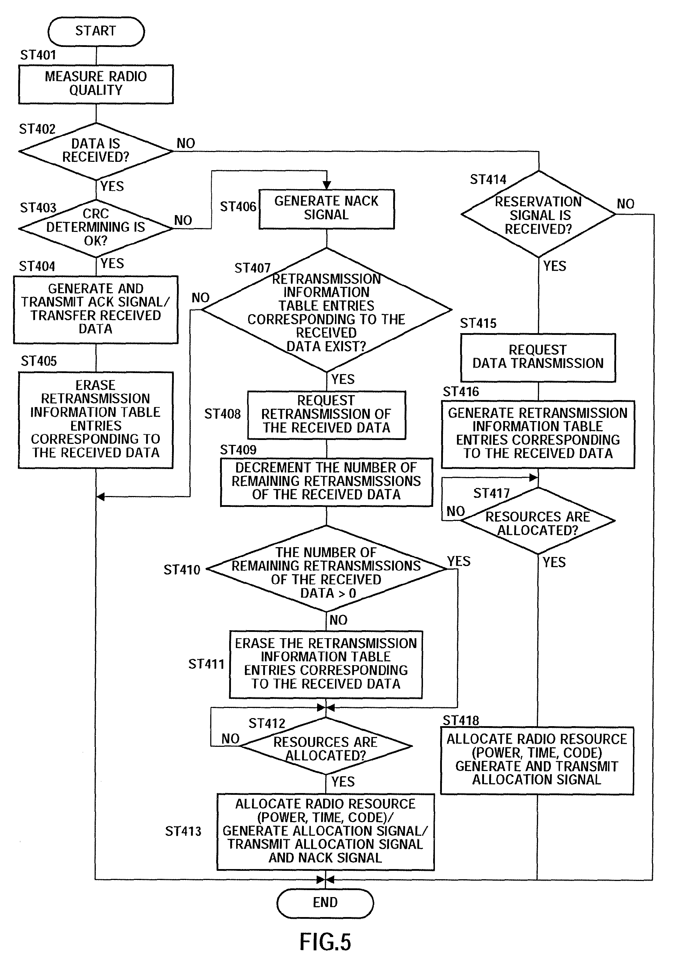

Next, referring to FIG.5, the operation when base station 11 receives a packet (reservation signal 20, data packet 22) will be described. In FIG.5, in step (hereinafter, abbreviated as "ST") 401, after receiving section 111 receives a packet (reservation signal 20, data packet 22), channel quality analyzing section 115 measures channel quality of the received signal, and in ST402, signal analyzing section 114 determines whether the received signal is data packet 22. As a result of the determination, when it is determined that the received data is data packet 22, the flow shifts to ST403, and, when it is determined that the received data is not data packet 22, the flow shifts to ST414.

In ST403, CRC determining section 117 determines CRC information associated with the data packet. When a determination result of the CRC information indicates that the data packet has no error, that is, OK, the flow shifts to ST404, and, when the determination result of the CRC information indicates that the data packet has an error, that is, NG, the flow shifts to ST406.

In ST404, control signal generating section 120 generates acknowledge signal (ACK) 23 and transmits the signal to mobile station 10. Then, in ST405, retransmission information table managing section 118 deletes the retransmission information table entries corresponding to received data packet 22 from retransmission information table 30, and the processing is finished.

In ST406, control signal generating section 120 generates acknowledge signal (NACK) 23, and in ST407, retransmission information table managing section 118 checks whether retransmission information table entries corresponding to received data packet 22 exist. When the entries do not exist, the processing is finished, and, when the entries exist, the flow shifts to ST408.

In ST408, a request for retransmitting received data packet 22 is issued, and in ST409, the number of remaining retransmissions of the entries is decremented.

In ST410, it is determined whether the number of remaining retransmissions exceeds zero, and, when the number of remaining retransmissions exceeds zero, the flow shifts to ST412, and, when the number of remaining transmissions does not exceed zero, that is, is zero, the flow shifts to ST411.

In ST411, entries where the number of remaining retransmissions is zero is deleted from retransmission information table 30, and in ST412, it is determined whether radio resources (power, time and code) are allocated in allocation determining section 116. When the resources are allocated, the flow shifts to ST413, and, when the resources are not allocated, the processing of ST412 is repeated.

In ST413, control signal generating section 120 generates allocation signal 21 and transmits generated allocation signal 21 and NACK generated in ST406 to mobile station 10, and the processing is finished.

In ST414, it is determined that the received signal is not data packet 22 in ST402, and therefore it is determined whether the received signal is reservation signal 20. When the received signal is reservation signal 20, the flow shifts to ST415, and, when the received signal is not reservation signal 20, the processing is finished.

In ST415, a request for transmitting data packet 22 is issued in response to received reservation signal 20, and in ST416, retransmission information table managing section 118 generates retransmission information table entries corresponding to received reservation signal 20 in retransmission information table 30.

InST417, it is determined whether radio resources (power, time and code) are allocated in allocation determining section 116. When the resources are allocated, the flow shifts to ST418, and, when the resources are not allocated, the processing of ST417 is repeated.

In ST418, control signal generating section 120 generates allocation signal 21 and transmits generated allocation signal 21 to mobile station 10, and the processing is finished.

Thus, according to this embodiment, it is possible to perform efficient resource allocation enabling retransmission data packet 22 to be transmitted without mobile station 10 transmitting a reservation signal for retransmission data packet 22 to base station 11.

In addition, in the above-mentioned embodiment, whether to perform resource allocation for a retransmission data packet is determined by the number of remaining retransmissions, but may be determined according to elapsed time from the transmission time of the reservation signal.

The present application is based on Japanese Patent Application No.2005-010479, filed on January 18, 2005, the entire content of which is expressly incorporated by reference herein.

### Industrial Applicability

A resource allocation method and a base station apparatus according to the present invention are suitable for use in a transmission/receiving apparatus for data packets where the delay time and overhead are reduced.

## Claims

1. A resource allocation method, comprising:
transmitting a reservation signal including a transmission packet length to a base station apparatus from a mobile station apparatus prior to first transmission of a data packet; and
when the base station apparatus detects an error in the data packet transmitted from the mobile station apparatus, transmitting a negative acknowledgement signal for reporting the error of the data packet to the mobile station apparatus from the base station apparatus, and allocating resources to the mobile station apparatus that retransmits the data packet where the error is detected based on the reservation signal.

2. The resource allocation method according to claim 1, wherein the resources are allocated according to the reservation signal and channel quality of a received signal where the error is detected.

3. A base station apparatus comprising:
a receiving section that receives a data packet transmitted from a mobile station apparatus, and a reservation signal including a transmission packet length transmitted prior to first transmission of the data packet;
a storage section that stores the reservation signal received in the receiving section;
an error detecting section that detects an error of the data packet received by the receiving section; and
an allocating section that, when the error detecting section detects the error in the data packet, allocates resources based on the reservation signal stored in the storage section to the mobile station apparatus that retransmits the data packet where the error is detected.

4. The base station apparatus according to claim 3, further comprising a channel quality measuring section that measures channel quality of the signal received in the receiving section,
wherein the allocating section allocates the resources according to the channel quality of the signal measured in the channel quality measuring section and the reservation signal.
